# EUROPEAN PATENT SPECIFICATION

(11) **EP 2 552 238 B1**
(45) Date of publication and mention of the grant of the patent: **03.12.2014**
(21) Application number: 11726494.5
(22) Date of filing: 28.03.2011
(51) Int. Cl.: A23L 1/22, A24B 15/28

(54) **METHOD AND COMPOSITION FOR LONG LASTING FLAVOR DELIVERY SYSTEM**
VERFAHREN UND ZUSAMMENSETZUNG FÜR EIN LANGANHALTENDES GESCHMACKSFREISETZUNGSSYSTEM
PROCÉDÉ ET COMPOSITION POUR SYSTÈME D'ADMINISTRATION D'ARÔME À LONG TERME

(30) Priority: 26.03.2010 US 318200 P
(43) Date of publication of application: 06.02.2013
(73) Proprietor: Philip Morris Products S.A., 2000 Neuchâtel (CH)
(72) Inventor: MONGIA, Gagan, Hershey, PA-17033 (US)
(74) Representative: Millburn, Julie Elizabeth
(86) International application number: PCT/IB2011/001133
(87) International publication number: WO 2011/117747

(56) References cited:
- WO-A1-2008/075945
- US-A- 3 914 439
- US-A- 4 076 847
- US-A1- 2006 286 200

## Description

### BACKGROUND

A need exists for long-lasting flavor delivery in oral sensorial products, especially when the products are meant for consumption by a slow dissolution and/or extraction process in the mouth.

WO 2008/075945 A1 discloses flavour encapsulate particles comprising a core particle coated with an inner coating layer comprising one or more flavourings contained in a carrier matrix and an outer coating layer comprising a substantial amount of an extract a plant material.

US 3,914,439 discloses dry, free-flowing particulate flavor compositions comprising a crystalline sugar core having at least two hydrogenated vegetable oil layers surrounding said core, at least one liquid flavor oil layer between said two hydrogenated vegetable oil layers and absorbed thereon, and an outer coating of an edible shellac.

### SUMMARY

According to the invention there is provided a flavor gradient capsule comprising: a core comprising a concentrated flavorant; an inner shell substantially surrounding the core, comprising the same flavorant at a lower concentration than exists in the core; and an outer shell substantially surrounding the inner shell, comprising the same flavorant at a lower concentration than exists in the inner shell.

According to the invention there is further provided a method of preparing an edible flavor gradient capsule, the method comprising the steps of coating a core comprising a concentrated flavorant with an inner shell comprising the same flavorant at a lower concentration than exists in the core; and subsequently coating the inner shell with an outer shell comprising the same flavorant at a lower concentration than exists in the inner shell, to form a flavor gradient capsule.

The invention further provides an orally-enjoyable product, comprising at least one flavor gradient capsule.

### BRIEF DESCRIPTION OF THE FIGURES

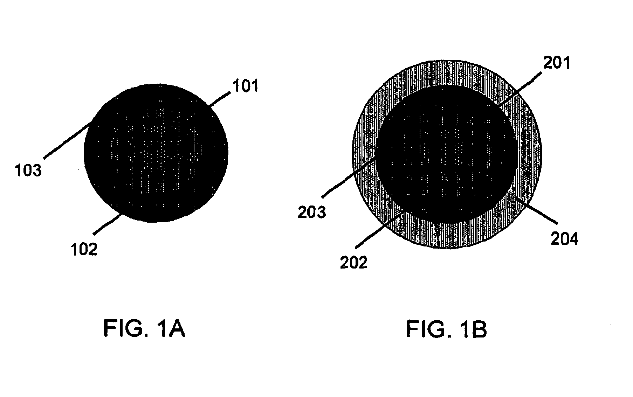

FIG. 1A is a schematic illustration of an exemplary flavor gradient capsule as described herein, wherein the capsule has a core and two coating layers. FIG. 1B is a schematic illustration of another exemplary flavor gradient capsule as described herein, wherein the capsule has a core and three coating layers.

### DETAILED DESCRIPTION

Primary factors affecting the duration of perceived flavors of orally enjoyable products include the concentration of the flavor in the oral cavity and the ability of the consumer to perceive the flavor at that concentration.

The ability of a consumer to perceive a particular flavor concentration (while varying among individuals) changes depending on previous exposure, which results in a degree of desensitization. Namely, recent past exposure to a flavor tends to increase the threshold of perception so that a higher concentration of flavor becomes required in order to be perceivable.

As a complicating factor, exposure to high concentrations of flavor can result in a negative flavor experience, presenting itself in the form of harshness, bitterness, burning, and/or pain. However, due to desensitization, concentrations that might result in a negative experience if presented initially may in fact provide a positive experience if presented following exposure to lower concentrations. Indeed, after desensitization, such high concentrations may be required in order for a flavor to continue to be perceivable by the consumer.

To address these issues, described herein is a delivery system that sequentially releases a flavor compound to provide for long lasting flavor delivery.

Preferably, the system takes the form of a flavor gradient capsule suitable for use as a flavor-providing ingredient. More preferably, the capsule is not suitable for use as a confection due to high concentration of flavoring.

As used herein, the term "orally enjoyable" denotes the ability of a material or product to be enjoyed and at least partially consumed via the mouth. An orally enjoyable product can take the form of a tablet, stick, chewable gum, spongy material, foam, cream, pellet, or fiber, or a form suitable to be contained in a pouch, or combinations of these. Examples of orally enjoyable products include chewable or non-chewable edible forms, including tablets, candies, gums, chocolates, flavored sponges, pouched products, lozenges, flavor strips, and the like. Further examples of orally enjoyable products include tobacco-free pouchless or pouched products, and smokeless tobacco including chewing tobacco, tobacco pouch products, and the like.

As used herein, the term "about" when used in conjunction with a stated numerical value or range has the meaning reasonably ascribed to it by a person skilled in the art, i.e. denoting somewhat more or somewhat less than the stated value or range, to within a range of ±10% of the stated value.

### The Coating(s)

The edible flavor gradient capsule is preferably be prepared by using a coating process including pan coating, fluidized bed coating, and the like. Preferably, the edible flavor gradient capsule is coated using a pan coating process.

The capsule preferably has a rounded form and contains a central core surrounded by two or more shells (also called coating layers). Each shell applied by the coating process preferably substantially surrounds the preceding shell. The core and shells of the capsule are preferably made of sugars, gums, and/or polyols.

FIG. 1A illustrates schematically an exemplary flavor gradient capsule as described herein, wherein the capsule has a core 101, an inner shell 102, and an outer shell 103. FIG. 1B is a schematic illustration of another exemplary flavor gradient capsule as described herein, a core 201, a first shell 202, a second shell 203, and a third shell 204.

Preferably, the resulting capsule has a mass of less than one gram, more preferably less than 500 mg, even more preferably less than 200 mg.

### The Flavor(s)

The edible flavor gradient capsule preferably includes one flavorant which decreases in concentration in successively from the core to each shell moving from the interior to the exterior of the capsule. Thus, the core will have the highest concentration of flavorant, the innermost shell the second highest concentration, and so on.

Exemplary flavorants include, but are not limited to, berry flavors such as pomegranate, acai, raspberry, blueberry, strawberry, boysenberry, and/or cranberry. Other suitable flavorants include, without limitation, any natural or synthetic flavor or aroma, such as menthol, peppermint, spearmint, wintergreen, bourbon, scotch, whiskey, cognac, hydrangea, lavender, chocolate, licorice, citrus and other fruit flavors, such as apple, peach, pear, cherry, plum, orange, lime, grape, and grapefruit, gamma octalactone, vanillin, ethyl vanillin, breath freshener flavors, butter, rum, coconut, almond, pecan, walnut, hazelnut, french vanilla, macadamia, sugar cane, maple, cassis, caramel, banana, malt, espresso, kahlua, white chocolate, spice flavors such as cinnamon, clove, cilantro, basil, oregano, garlic, mustard, nutmeg, rosemary, thyme, tarragon, dill, sage, anise, and fennel, methyl salicylate, linalool, jasmine, coffee, olive oil, sesame oil, sunflower oil, bergamot oil, geranium oil, lemon oil, ginger oil, balsamic vinegar, rice wine vinegar, and red wine vinegar. Preferred flavors include cinnamol, tymool, and/or tea tree.

The exact amounts of flavors in the core and each shell may be varied depending on the intended use of the flavor capsule, and may be easily determined without undue experimentation.

In an embodiment, the concentrated flavorant is present in the core in an amount sufficient to cause harshness, bitterness, burning, and/or pain in the absence of prior exposure to the same flavorant at the lower concentration. As described herein, "prior exposure" means exposure in an amount sufficient and within a time period recently sufficient so as to result in desensitization to the flavorant. In another embodiment, the amount of flavorant in the inner or outer shell is not sufficient to cause harshness, bitterness, burning and/or pain in the absence of prior exposure to the same flavorant.

## Claims

1. An edible flavor gradient capsule, comprising:
a core (101, 201) comprising a concentrated flavorant;
an inner shell (102, 202) substantially surrounding the core, comprising the same flavorant at a lower concentration than exists in the core; and
an outer shell (103, 203) substantially surrounding the inner shell, comprising the same flavorant at a lower concentration than exists in the inner shell.

2. The capsule of claim 1, wherein the concentrated flavorant is present in an amount sufficient to cause harshness, bitterness, burning, and/or pain in the absence of prior exposure to the same flavorant at the lower concentration.

3. The edible flavor gradient capsule of claim 1 further comprising one or more additional shells (204), each of which surrounds a preceding shell and comprises a concentration of said flavorant which is lower than that of the preceding shell.

4. The edible flavor gradient capsule of claim 3, wherein a total number of shells is at least five.

5. The edible flavor gradient capsule of claim 4, wherein a total number of shells is at least ten.

6. The edible flavor gradient capsule of claim 1, wherein said core and shells comprise a substance selected from the group consisting of sugars, gums, and polyols.

7. The edible flavor gradient capsule of claim 1, wherein said flavor gradient capsule has a mass of less than one gram.

8. The edible flavor gradient capsule of claim 7, wherein said flavor gradient capsule has a mass of less than 500 mg.

9. The edible flavor gradient capsule of claim 8, wherein said flavor gradient capsule has a mass of less than 200 mg.

10. An orally-enjoyable product comprising at least one flavor gradient capsule according to claim 1.

11. The orally-enjoyable product of claim 10 in the form of a tablet, stick, chewable gum, spongy material, foam, cream, pellet, fiber, or a form suitable to be contained in a pouch.

12. A smokeless tobacco product comprising at least one flavor gradient capsule according to claim 1.

13. A method of preparing an edible flavor gradient capsule, comprising the steps of:
coating a core comprising a concentrated flavorant with an inner shell comprising the same flavorant at a lower concentration than exists in the core; and
subsequently coating the inner shell with an outer shell comprising the same flavorant at a lower concentration than exists in the inner shell, to form a flavor gradient capsule.

14. The method of claim 13, further comprising successively coating the outer shell with one or more additional shells, wherein each successive shell comprises a lower concentration of said flavorant than the preceding shell.

15. The method of claim 13, wherein at least one of said coating steps comprises pan coating.

## Patentansprüche

1. Verzehrbare Kapsel mit abgestuftem Geschmack umfassen:
einen Kern (101, 201), der einen konzentrierten Geschmacksstoff aufweist,
eine den Kern im Wesentlichen umgebende innere Hülle (102, 202), die denselben Geschmacksstoff mit einer geringeren Konzentration, als im Kern besteht, aufweist, und
eine die innere Hülle im Wesentlichen umgebende äußere Hülle (103, 203), die denselben Geschmacksstoff mit einer niedrigeren Konzentration, als in der inneren Hülle besteht, aufweist.

2. Kapsel nach Anspruch 1, wobei der konzentrierte Geschmacksstoff in einer Menge vorhanden ist, die in Abwesenheit von früherem Kontakt mit demselben Geschmacksstoff mit der niedrigeren Konzentration ausreicht, um Schärfe, Bitterkeit, Brennen und/oder Schmerzen zu verursachen.

3. Verzehrbare Kapsel mit abgestuftem Geschmack nach Anspruch 1, die ferner eine oder weitere zusätzliche Hüllen (204) aufweist, die jeweils eine vorhergehende Hülle umgeben und eine Konzentration des genannten Geschmacksstoffs aufweisen, die niedriger als die der vorhergehenden Hülle ist.

4. Verzehrbare Kapsel mit abgestuftem Geschmack nach Anspruch 3, wobei eine Gesamtzahl von Hüllen wenigstens fünf ist.

5. Verzehrbare Kapsel mit abgestuftem Geschmack nach Anspruch 4, wobei eine Gesamtzahl von Hüllen wenigstens zehn ist.

6. Verzehrbare Kapsel mit abgestuftem Geschmack nach Anspruch 1, wobei der genannte Kern und die genannten Hüllen einen Stoff umfassen, der aus der Gruppe bestehend aus Zuckern, Gummis und Polyolen ausgewählt ist.

7. Verzehrbare Kapsel mit abgestuftem Geschmack nach Anspruch 1, wobei die Kapsel mit abgestuftem Geschmack eine Masse von weniger als einem Gramm hat.

8. Verzehrbare Kapsel mit abgestuftem Geschmack nach Anspruch 7, wobei die genannte Kapsel mit abgestuftem Geschmack eine Masse von weniger als 500 mg hat.

9. Verzehrbare Kapsel mit abgestuftem Geschmack nach Anspruch 8, wobei die genannte Kapsel mit abgestuftem Geschmack eine Masse von weniger als 200 mg hat.

10. Oral genießbares Produkt, das wenigstens eine Kapsel mit abgestuftem Geschmack nach Anspruch 1 aufweist.

11. Oral genießbares Produkt nach Anspruch 10 in der Form einer Tablette, eines Stabs, eines Kaugummis, eines schwammigen Materials, eines Schaums, einer Creme, eines Pellets, einer Faser oder einer Form, die dafür geeignet ist, in einer Tasche enthalten zu sein.

12. Rauchloses Tabakprodukt, das wenigstens eine Kapsel mit abgestuftem Geschmack nach Anspruch 1 umfasst.

13. Verfahren zum Herstellen einer verzehrbaren Kapsel mit abgestuftem Geschmack, umfassend die folgenden Schritte:
Beschichten eines Kerns, der einen konzentrierten Geschmacksstoff umfasst, mit einer inneren Hülle, die denselben Geschmacksstoff mit einer geringeren Konzentration, als im Kern besteht, aufweist, und
anschließend Beschichten der inneren Hülle mit einer äußeren Hülle, die denselben Geschmacksstoff mit einer niedrigeren Konzentration, als in der inneren Hülle besteht, aufweist, um eine Kapsel mit abgestuftem Geschmack zu bilden.

14. Verfahren nach Anspruch 13, das ferner das aufeinanderfolgende Beschichten der äußeren Hülle mit einer oder mehreren zusätzlichen Hüllen aufweist, wobei jede nachfolgende Hülle eine niedrigere Konzentration des genannten Geschmacksstoffs als die vorhergehende Hülle aufweist.

15. Verfahren nach Anspruch 13, wobei wenigstens einer der genannten Beschichtungsschritte Beschichten im Dragierkessel umfasst.

## Revendications

1. Capsule à gradient d'arôme comestible, comprenant :
un coeur (101, 201) comprenant un aromatisant concentré ;
une coquille interne (102, 202) entourant sensiblement le coeur, comprenant le même aromatisant à une concentration inférieure à celle de l'aromatisant se trouvant dans le coeur ; et
une coquille externe (103, 203) entourant sensiblement la coquille interne, comprenant le même aromatisant à une concentration inférieure à celle de l'aromatisant qui se trouve dans la coquille interne.

2. Capsule selon la revendication 1, dans laquelle l'aromatisant concentré est présent dans une quantité suffisante pour causer une acreté, une amertume, une brûlure et/ou une douleur en l'absence d'une exposition antérieure au même aromatisant à la concentration inférieure.

3. Capsule à gradient d'arôme comestible selon la revendication 1, comprenant en outre une ou plusieurs coquilles supplémentaires (204), chacune d'elles entourant une coquille précédente, et comprenant une concentration dudit aromatisant qui est inférieure à celle de l'aromatisant se trouvant dans la coquille précédente.

4. Capsule à gradient d'arôme comestible selon la revendication 3, dans laquelle un nombre total de coquilles est au moins de cinq.

5. Capsule à gradient d'arôme comestible selon la revendication 4, dans laquelle un nombre total de coquilles est au moins de dix.

6. Capsule à gradient d'arôme comestible selon la revendication 1, dans laquelle lesdits coeur et coquilles comprennent une substance sélectionnée dans le groupe consistant en sucres, gommes et polyols.

7. Capsule à gradient d'arôme comestible selon la revendication 1, ladite capsule à gradient d'arôme ayant une masse de moins d'un gramme.

8. Capsule à gradient d'arôme comestible selon la revendication 7, ladite capsule à gradient d'arôme comestible ayant une masse de moins de 500 mg.

9. Capsule à gradient d'arôme comestible selon la revendication 8, ladite capsule à gradient d'arôme ayant une masse de moins de 200 mg.

10. Produit agréable oralement comprenant au moins une capsule à gradient d'arôme selon la revendication 1.

11. Produit agréable oralement selon la revendication 10 se présentant sous forme de comprimé, bâtonnet, gomme à mâcher, substance spongieuse, mousse, crème, pastille, fibre, ou forme pouvant être contenue dans un étui.

12. Produit de tabac sans fumée comprenant au moins une capsule à gradient d'arôme selon la revendication 1.

13. Procédé de préparation d'une capsule à gradient d'arôme comestible, comprenant les étapes consistant à :
enrober un coeur comprenant un aromatisant concentré avec un coquille interne comprenant le même aromatisant à une concentration inférieur à celle de l'aromatisant se trouvant dans le coeur ; et
enrober subséquemment la coquille interne avec une coquille externe comprenant le même aromatisant à une concentration inférieure à celle de l'aromatisant qui se trouve dans la coquille interne, pour former une capsule à gradient d'arôme.

14. Procédé selon la revendication 13, comprenant en outre l'enrobage successif de la coquille externe avec une ou plusieurs coquilles supplémentaires, dans lequel chaque coquille successive comprend une concentration dudit aromatisant inférieure à celle de l'aromatisant se trouvant dans la coquille précédente.

15. Procédé selon la revendication 13, dans lequel au moins l'une desdites étapes d'enrobage comprend un enrobage en turbine.
